# EUROPEAN PATENT SPECIFICATION

(11) **EP 1 419 508 B1**
(45) Date of publication and mention of the grant of the patent: **15.11.2006**
(21) Application number: 02759042.1
(22) Date of filing: 22.08.2002
(51) Int. Cl.: G21C 17/10, G21C 17/02, G21C 7/10

(54) **A METHOD AND A DEVICE FOR EVALUATING THE INTEGRITY OF A CONTROL SUBSTANCE IN A NUCLEAR PLANT**
VERFAHREN UND EINRICHTUNG ZUR BEWERTUNG DER INTEGRITÄT EINER STEUERSUBSTANZ IN EINER NUKLEARANLAGE
PROCEDE ET DISPOSITIF PERMETTANT L'EVALUATION DE L'INTEGRITE D'UNE SUBSTANCE DE CONTROLE DANS UNE CENTRALE NUCLEAIRE

(30) Priority: 23.08.2001 SE 0102813
(43) Date of publication of application: 19.05.2004
(73) Proprietor: Westinghouse Electric Sweden AB, 721 63 Västerås (SE)
(72) Inventor: SIHVER, Lembit, S-414 63 Göteborg (SE); MAGNUSSON, Kurt-Ake, S-730 50 Skultuna (SE); BJURMAN, Björn, S-742 35 Östhammar (SE)
(74) Representative: Berglund, Stefan
(86) International application number: PCT/SE2002/001502
(87) International publication number: WO 2003/021605

(56) References cited:
- WO-A1-99/27541
- JP-A- 62 006 200
- DATABASE WPI Week 198707, Derwent Publications Ltd., London, GB; Class K05, AN 1987-047445, XP002957973 & JP 62 006 200 A (NIPPON GENSHIRYOKU JIGYO KK) 13 January 1987

## Description

### THE BACKGROUND OF THE INVENTION AND PRIOR ART

The present invention refers to a method for evaluating the integrity of a control rod material in a nuclear plant, which includes a reactor vessel, a reactor core that is enclosed in the reactor vessel and is formed by a number of nuclear fuel elements and a number of cladding members, in which said control material is enclosed and which are introduceable into and retractable from the reactor core, and a circuit that is arranged to permit a flowing of a fluid through the reactor core and through an external conduit arrangement. The invention also refers to a device for evaluating the integrity of a control rod material in a nuclear plant, which the plant includes a reactor vessel, a reactor core that is enclosed in the reactor vessel and is formed by a number of nuclear fuel elements and a number of cladding members, in which said control material is enclosed and which are introduceable into and retractable from the reactor core, and a circuit that is arranged to permit a flowing of a fluid through the reactor core and through an external conduit arrangement.

It is well known in such nuclear plants to use boron carbide as control material in so called control rods. Each control rod forms one or several pressure vessels housing a determined quantity of boron carbide. A known control rod is designed with four longitudinal wings, which form a cross seen in a cross-section through the control rod. Each wing includes a cavity and thus forms such a separate pressure vessel.

The control rods are introducable into and retractable out of the reactor core in order to control the nuclear reaction in the nuclear fuel, and in such a manner control the effect of the plant. The boron carbide has an ability to absorb neutrons, wherein the nuclear reaction will be reduced when a control rod is introduced into the reactor core since the number of free neutrons decreases.

One may differentiate between control rods for controlling the nuclear reaction during operation and shutdown rods. The latter are, during operation of the nuclear plant, completely retracted from the reactor core and merely intended to be introduced into the core when the operation of the plant is to be interrupted. It is to be noted, that it is also possible to use shutdown rods as control rods and vice versa.

During operation of the plant neutrons, which are captured by the boron carbide as mentioned above, are released. A nuclear reaction will then take place in the boron carbide, wherein tritium and helium are formed. The active boron (B-10-isotopes) are consumed during the formation of the reaction products. A substantially larger amount of helium, approximately by a factor 10⁵, then tritium is formed. The tritium formed and a part of the helium will be dissolved in the boron carbide. However, the helium is also released from the boron carbide and forms a gas in the cavity mentioned above in the control rod. This gas formation leads to an increase of the pressure in the control rod.

The cladding members of the control rods may be manufactured of a steel alloy. Defects may rise on the cladding members for various reasons, for instance due to mechanical wear, material defects etc. Such a defect may lead to the formation of a hole in the cladding member, through which the gaseous helium in the control rod may be pressed out into the reactor core, and through which the water present in the reactor vessel may penetrate into the control rod. If the reaction products of the spent boron comes into contact with water, the helium and the tritium dissolved in the boron carbide structure will be released and after a time period tritium may thus reach the water in the reactor vessel together with the released helium. If the defect is serious also boron will be released and one may have a so-called washing out, i.e. boron carbide is washed out of the control rod.

It is of course desirable to avoid defects on the control rods and to replace control rods having a defect. A control rod defect may lead to reduced possibilities to control the plant since the neutron absorbing capability is deteriorated. Furthermore, a control rod defect may lead to a deformation of the cladding member, which may make the manoeuvring of the control rod into and out of the reactor core impossible.

WO99/27541 discloses a device for evaluating the integrity of the fuel rods in a nuclear plant. The evaluation is made by means of continuous measurements of the activity in the off-gases and in the reactor water.

### SUMMARY OF THE INVENTION

The object of the present invention is to reduce the need of inspection of the control rods in a nuclear plant. More specifically, it is aimed at improved the possibilities to supervise the integrity of the control rods.

This object is obtained by the method initially defined, which is characterised by the steps of:
determining the value of at least one primary parameter that includes the concentration of a substance, which is released from the control rod material during the operation of the nuclear plant, in said fluid,
determining the value of at least one operational parameter related to said fluid,
standardising the value of said primary parameter with respect to the value of said operational parameter, analysing the standardised value of said primary parameter, and
estimating the integrity of the control rod material on the basis of said analysis.

By means of such a method it is possible to supervise substantially continuously the control rods in a reactor vessel and to determine if there is any defects on any of the control rods. Thanks to the standardisation of the concentration of the released substance it is also possible to make an estimation of the size of the defect since this size depends on the quantity of the released substance. By observing when the concentration of the substance increases one may also determine when a defect occurs. In such a way the method also enables an estimation of how many defect control rods and control rod blades are present in the reactor core. The analysis is possible to make by measuring the concentration of many different substances, for instance tritium, helium, lithium, boron etc. The analysis may thus be performed by a supervision of any of the substances released when the control rod material comes into contact with the fluid flowing through the reactor core. However, it is important to take into consideration and to correct for the tritium recirculated to the reaction via the deluting feed water. Therefore, it is advantageous also to measure the tritium content in the deluting feed water, and the volume and flow of the deluting feed water.

According to an embodiment of the invention, said primary parameter includes a first parameter, which includes the concentration of tritium in said fluid. Tritium is formed in the boron carbide, which may be used as control material, when the boron carbide is subjected to neutron radiation. As long as the cladding member is complete, the tritium formed will be enclosed in the cladding member. However, if a defect arises on the cladding member, the tritium will reach the reactor water and by a measurement of the tritium concentration in the reactor water, a defect on the cladding member for the control material will thus be established.

According to a further embodiment of the invention, said primary parameter includes a first primary parameter, which includes the concentration of tritium in said fluid. It is to be noted that the fuel rods produce substantially smaller quantities of tritium when they are subjected to neutron radiation than the control material enclosed in the cladding member.

According to a further embodiment of the invention, said fluid includes the feed water supplied to the reactor vessel, wherein said determining takes place by measuring on the feed water. By such a measuring of the tritium concentration in the feed water a proper result is achieved since the water then has been distilled one time. According to an alternative or supplementary embodiment of the invention, said fluid includes the reactor water present in the reactor vessel, wherein said determining takes place by measuring on the reactor water. Advantageously, said measuring may take place after the fluid has passed an ion exchanger. Furthermore, said measuring may take place after the fluid has passed a particle filter. It is also advantageously to make said measuring after the fluid has passed a delay circuit.

According to a further embodiment of the invention, said primary parameter includes a second primary parameter, which includes the concentration of helium in the gas flow discharge from said fluid. When the control material, in the form of boron carbide, is subjected to neutron radiation, also helium is produced. Helium will then be bound in the boron carbide but may also be present in the cladding member as a free gas. When a defect arises this free gas will very quick be pressed out of the cladding member, and thus there arises a substantially instantaneous peak level for the helium concentration in said gas flow. The helium, which is bound in the control material, will thereafter at a more slow speed be released and result in an increased helium level in the off-gases. Also a defect fuel rod may give rise to the release of helium. In the nuclear fuel, there is however not as large quantities of helium bound and therefore no slow release of helium arises after the initial peak level. In such a way it is possible to differentiate a defect cladding member for the control material from a fuel defect. When a fuel defect occurs also radioactive inert gases are released. By simultaneously measuring these, for instance by the device described in WO99/27541, defects on the fuel rods may be separated from the defects on the control rods.

By determining both the concentration of tritium in said fluid and the concentration of helium in the gas flow, a very reliable instrument for detecting a defect on a cladding member for a control material is achieved.

According to a further embodiment of the invention, the method includes the step of determining a reference value for said primary parameter. As mentioned above, tritium is also produced by the fuel when it is subjected to neutron radiation. Further tritium production in a reactor is obtained due to reactions in the reactor water and from the lithium which may be present in a reactor vessel in the form of contaminations. Furthermore, tritium may during a relatively long time period be present in the fluid or reactor water since previous defects that are already detected and determined on the cladding members for the control material. Thus there is during normal operational conditions always a certain content of tritium in the fluid. It is therefore advantageous to determine, by measurements, this content and to let it form a reference value from which the determinations mentioned above may be performed. Such a reference value may advantageously also be determined for other substances, for instance helium.

According to a further embodiment of the invention, the method includes the following step of determining guide lines for the continuing operation of the plant with respect to said estimation. By the determinations made one may thus determine the size of a detected defect, on which cladding member the defect has occurred etc. Such a knowledge is important for determining if the plant is to be further operated or if the operation is to be interrupted. The knowledge may also lead to continuing operation of the plant in a modified manner, for instance at a lower effect in the part of the reactor core where the defect has occurred. According to the invention, such guide lines may be produced in an automatic manner from the estimation made.

According to a further embodiment of the invention, the method includes the following step of controlling the plant with respect to said guide lines. It is thus possible to transfer the produced guide lines to a control unit for in such a way automatically controlling the plant in accordance with these guide lines.

According to a further embodiment of the invention, the determining of the value of said primary parameter is performed substantially continuously during the operation of the plant. The concentration of helium in said gas flow may by methods known per se be measured continuously. By such a substantially continuous measurement it is also possible to study the helium concentrations over the time and in such a way the peak levels mentioned above may be detected in an efficient manner. Also the tritium concentration may be subjected to a substantially continuous on-line measurement, which advantageously is measured on the feed water, wherein a part of the fluid flow is discharged to a measuring device for the establishment of the tritium concentration. From this measuring device, this part flow may be recirculated to a main flow for the fluid.

According to a further embodiment of the invention, said operational parameter includes a first operational parameter related to an addition of said fluid to the circuit. The exchange of the fluid of course plays an important role for the size of the concentration of the substance in question. If the exchange is high, one obtains a value of the concentration which is smaller than if the exchange would have been small. The plant normally is supplied with deluting feed water and thus, the method may include the further step of determining the supply of tritium via the deluting feed water by measuring on the deluting feed water. Advantageously, said determining of the tritium supply includes a measuring of the volume and the flow of deluting feed water.

According to a further embodiment of the invention, said operational parameter includes a second operational parameter related to the effect generated by the plant. The effect generation is also substantial for the concentration of for instance tritium and helium, both instantaneously and historically.

According to a further embodiment of the invention, said operational parameter includes a third operational parameter related to said gas flow. For the determining of for instance the concentration of helium in the gas flow, it is advantageous to consider the size of the total gas flow.

According to a further embodiment of the invention, said analysis is performed with respect to historical data regarding said parameter. As mentioned above, for instance the effect by which the plant has been operated during a longer period of time will influence the concentration of the measured substances. Such historical data may be loaded from a memory unit in which these are stored. The memory unit includes operational statistics and defect risks according to the operational experiences that has been accumulated, and calculated inventory of helium and tritium in the control rods. If a defect has been indicated, an order of priority is established for inspection during the future, normally yearly operation shutdown. The order of priority is based on the follow up of operational parameters, and the operation history and operation experiences of the control rods. In the memory unit, there may also be information about each individual cladding member for control material. Such information may refer to the age of the cladding member, type, manufacturer, estimated burn out of B-10 for each control rod, and accumulated operation history of each control rod etc. In the memory unit a knowledge about the cladding members which are present in the rector vessel may thus be built up and in such a way the analysis may be developed with the time and become even more sophisticated.

The object is also obtained by the device initially defined, which is characterised in that the device includes first means for determining the value of at least one primary parameter that includes the concentration of a substance, which is released from the control rod material during the operation of the nuclear plant, in said fluid, second means for determining the value of at least one operational parameter related to said fluid, third means for standardising the value of said primary parameter with respect to the value of said operational parameter, fourth means for analysing the standardised value of said primary parameter, and fifth means for estimating the integrity of the control rod material on the basis of said analysis.

Advantageous embodiments of the device are defined in the dependent claims 23-30.

### BRIEF DESCRIPTION OF THE DRAWING

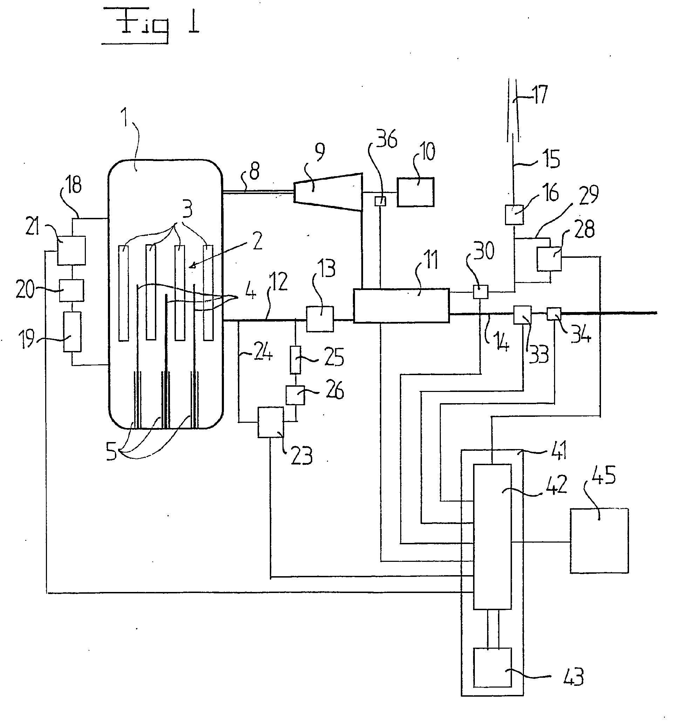

The present invention is now to be explained more closely by means of an embodiment, which is described merely as an example, and with reference to the drawing attached, in which Fig 1 discloses schematically a nuclear plant with a device for the evaluation of the integrity of a control material.

### DETAILED DESCRIPTION OF AN EMBODIMENT OF THE INVENTION

Fig 1 discloses schematically a nuclear plant including a reactor disclosed as a reactor vessel 1. The reactor disclosed is a so-called boiling water reactor, BWR. In the reactor vessel 1, a reactor core 2 is enclosed. The reactor core 2 encloses a number of nuclear fuel elements 3, which may be arranged in various manners. For instance, the nuclear fuel elements 3 may each include a number of nuclear fuel assemblies, which in turn enclose a number of fuel rods in which the nuclear fuel is arranged in the form of so-called fuel pellets. Such an arrangement of the nuclear fuel elements 3 is known per se. The reactor core 2 also includes a number of cladding members 4 including a control material for controlling the effect of the reactor. In the embodiment disclosed, these cladding members with the control material are called control rods 4 which ought to be the conventional name. These control rods 4 may be designed in various ways and for instance consist of four wings, which seen in a section across the longitudinal direction of the control rod 4 form a cross. In each wing the control material is arranged in substantially horizontal channels, and the channels in each of the wings are connected to each other so that each wing forms a closed container. The control rods 4 are also designed in such a way that these closed containers will resist high inner and outer pressures.

The control rods 4 are introduceable into and retractable out of the reactor core 2 by means of schematically disclosed drive members 5. As appears from Fig 1, the control rods 4 may be located in different positions in the reactor core 2. The control rods 4 may be of two different types, a first type for controlling the effect of the plant and a second type which primarily has the task of being introduced into the reactor core 2 when the operation of the plant is to be interrupted, so-called shutdown rods 4. In Fig 1 four control rods 4 are disclosed merely schematically, and no difference is made between different types of existing control rods. It is to be noted that the plant may include a large number of control rods 4.

The plant also includes a steam conduit 8 for leading the steam generated in the reactor vessel 1 to a steam turbine 9, which drives a generator 10 for the generation of electric effect. From the steam turbine 9, the steam is conveyed to a condenser 11 where the steam is condensed. The condensed steam is conveyed as feed water back to the reactor vessel 1 via a feed water conduit 12 and through a condensate cleaning device 13 (Condensate Polishing Plant). Fresh water may be added to this circuit 1, 8, 9, 11 and 12 via a deluting feed conduit 4, which is connected to the condenser 11. During the nuclear reaction off-gases are also formed. These are conveyed out of the reactor vessel 1 together with the steam and separated in the condenser 11. The separated off-gases are conveyed out of the plant via an off-gas conduit 15, a delay system 16 and a stack 17.

The plant also includes a reactor water circuit 18, which permits flowing of reactor water through an external conduit arrangement, the reactor vessel 1 and the reactor core 2. The reactor water will then flow from a lower part of the reactor vessel 1 via a delay circuit 19 and a cleaning device 20 to a first measuring device 21 and from there back to the reactor vessel 1. The cleaning device 20 includes an ion exchanger and a particle filter for cleaning and filtering of the reactor water.

The first measuring device 21 is arranged to measure the concentration of one or several substances present in the reactor water and thus conveyed through the reactor water circuit 18. In the embodiment disclosed this substance is tritium. A part of the reactor water flow flowing through the reactor water circuit 18 is then conveyed to the first measuring device 21 in which the concentration measurement is performed. When an acceptable measurement result is present, the reactor water is recirculated to the reactor vessel 1.

The device also includes a second measuring device 23, which functions in the same way as the first measuring device 20 and which is arranged to measure the tritium concentration in the feed water flow. A part of the feed water is conveyed through a feed water circuit 24 from the feed water conduit 12 via a delay loop 25 and a cleaning device 26 to the second measuring device 23 and from there back to the feed water conduit 12. The cleaning device 26 includes an ion exchanger and a particle filter.

The device also includes a third measuring device 28 which is arranged to enable the measurement of the concentration of a substance in the off-gases leaving the plant via the off-gas conduit 15. A part of the off-gases is conveyed via an off-gas circuit 29 to the third measuring device 28 and from there back to the off-gas conduit 15. In the embodiment disclosed, the concentration of helium in the off-gases is measured. Such measurements may be performed on-line and substantially continuously by means of a measuring device known per se. The device also includes a flow meter 30 which is arranged to enable measurement of the total off-gas flow through the off-gas conduit 15 leaving the plant. In such a way one may perform a flow correction in order to obtain a correct value of the helium concentration in the off-gases.

The device also includes a fourth measuring device 33, which is provided on the deluting feed conduit 14 and arranged to measure the tritium concentration in the deluting water flow. Furthermore, a fifth measuring device 34 is advantageously arranged to measure the volume and the flow of the deluting feed water. In order to estimate the quantity of tritium in the reactor core 2 it is important to take into consideration, and correct for, the tritium which is recirculated to the reactor vessel 1 via the deluting feed water.

Furthermore, the device includes a schematically indicated sixth measuring device 36 by means of which the generated effect of the plant may be sensed and measured.

The values obtained by the measuring device 21, 23, 28, 30, 33, 36 are supplied to a processing unit 41, which may be realised by means of a computer processor 42 and a memory unit 43 and which may form a so-called "professional" analysing aiding means. The processing unit 41 includes means for standardising the values obtained with regard to the tritium concentration and the helium concentration in such a way that comparable concentration values are obtained. The standardisation may be made from different operational parameters, for instance the operational parameters obtained by the disclosed flow meters 30 and 34, and by the sixth measuring device 36 for measuring the effect. The standardisation may also take into consideration other operational parameters. The processing unit 41 is also arranged to create reference values forming starting points for the substance concentrations which are to be determined.

Furthermore, the processing unit 41 includes tools in the form of software for the analysis of the standardised values obtained in such a way that the integrity of the control rods may be estimated. By means of these analysing tools of the processing unit 41 one may thus establish if one or several control rods 4 has any defects, the size of the defect in that case and when the defect occurred with regard to the time.

In the memory unit 43 there may be a data base including information about all control rods 4 of the plant. This information may refer to the age of the different control rods 4, the manufacturer, the type and historical data regarding the positions of the different control rods 4 in the reactor core 2 during different operation periods, and if the control rods 4 have been utilised as control rods or shutdown rods. By means of this history, the inventory of helium and tritium may be calculated for each control rod. Furthermore, the memory unit 43 may be arranged to store historical data regarding the output effect of the plant, previously measured contents of different substances such as tritium, helium, lithium, boron, krypton, xenon etc. It is to be noted that the analyse mentioned above of course may be improved if consideration is taken to the information that may be stored in the memory unit 43. This information may be developed over the time, and the system is thus self-learning and enables a more sophisticated and secure analysis of the integrity of the control rods 4 as the information content in the memory unit 43 increases.

Furthermore, the plant includes a schematically disclosed control unit 45 representing the main control system for the plant. By such a control unit 45 the output effect of the reactor may be controlled and the control unit 45 is for instance arranged to position the control rods 4 by means of the drive members 5. The processing unit 41 may be arranged to produce guide lines starting from the analysis of the integrity of the different control rods 4, and these guide lines may be transferred in an automatic manner to the control unit 45 for influencing the control of the plant, and inspection and possible removal of defect control rods 4 from the reactor core 2.

The device for evaluating the integrity of the control rods in accordance with the present invention may advantageously be combined with a device for evaluating the integrity of the fuel elements 3 in the nuclear plant. Such a device is described in the above-mentioned WO99/27541. By combining these two devices, wherein the processing unit 41 may be expanded to perform the analysis and producing the guide lines both with regard to the control rods 4 and the fuel elements 3, very advantageous possibilities are obtained for supervising and controlling the nuclear plant with respect to possibly arising defects.

The invention is not limited to the embodiment disclosed but may be varied and modified within the scope of the following claims.

## Claims

1. A method for evaluating the integrity of a control rod material in a nuclear plant, which includes
a reactor vessel,
a reactor core that is enclosed in the reactor vessel and is formed by a number of nuclear fuel elements and a number of cladding members, in which said control material is enclosed and which are introduceable into and retractable from the reactor core, and
a circuit that is arranged to permit a flowing of a fluid through the reactor core and through an external conduit arrangement,
**characterised in that** the method includes the steps of:
determining the value of at least one primary parameter that includes the concentration of a substance, which is released from the control rod material during the operation of the nuclear plant, in said fluid, wherein said primary parameter includes a first primary parameter, which includes the concentration of tritium in said fluid, a second primary parameter, which includes the concentration of helium in a gas flow discharged from said fluid,
determining the value of at least one operational parameter related to said fluid,
standardising the value of said primary parameter with respect to the value of said operational parameter,
analysing the standardised value of said primary parameter, and
estimating the integrity of the control rod material on the basis of said analysis.

2. A method according to claim 1, wherein said fluid includes feed water supplied to the reactor vessel and wherein said determining takes place by measuring on the feed water.

3. A method according to any one of claims 1 and 2, wherein said fluid includes reactor water present in the reactor vessel and wherein said determining takes place by measuring on the reactor water.

4. A method according to any one of claims 2 and 3, wherein said measuring takes place after the fluid has passed an ion exchanger.

5. A method according to any one of claims 2 to 4, wherein said measuring takes place after the fluid has passed a particle filter.

6. A method according to any one of claims 2 to 5, wherein said measuring takes place after the fluid has passed a delay circuit.

7. A method according to any one of the preceding claims, including the step of determining a reference value for said primary parameter.

8. A method according to any one of the preceding claims, including the following step of determining guide lines for the continuing operation of the plant with respect to said estimation.

9. A method according to any one of the preceding claims, including the following step of determining guide lines for inspection and removing of defect control rods from the reactor core during a future shutdown of the plant.

10. A method according to any one of claims 8 and 9, including the following step of controlling the plant with respect to said guide lines.

11. A method according to any one of the preceding claims, wherein the determining of the value of said primary parameter is performed substantially continuously during the operation of the plant.

12. A method according to any one of the preceding claims, wherein said operational parameter includes a first operational parameter related to an addition of said fluid to the circuit.

13. A method according to claim 12, wherein the plant is supplied with diluting feed water and wherein the method includes the further step of
determining the supply of tritium via the diluting feed water by measuring on the diluting feed water.

14. A method according to claim 13, wherein said determining of the tritium supply includes measuring the volume and the flow of diluting feed water.

15. A method according to any one of the preceding claims, wherein said operational parameter includes a second operational parameter related to the effect generated by the plant.

16. A method according to any one of the preceding claims, wherein said operational parameter includes a third operational parameter related to said gas flow.

17. A method according to any one of the preceding claims, wherein said analysis is performed with respect to historical data regarding said parameters.

18. A method according to claim 17, wherein if the said analysis indicates a defect control rod the extension of the defect is calculated by means of a comparison of the leakage of tritium and helium from the defect control rod with the inventory of tritium and helium.

19. A method according to any one of claims 17 and 18, wherein said historical data are loaded from a memory unit in which they are stored.

20. A device for evaluating the integrity of a control rod material in a nuclear plant, which the plant includes
a reactor vessel (1),
a reactor core (2) that is enclosed in the reactor vessel and is formed by a number of nuclear fuel elements (3) and a number of cladding members (4), in which said control material is enclosed and which are introduceable into and retractable from the reactor core (2), and
a circuit (6) that is arranged to permit a flowing of a fluid through the reactor core (2) and through an external conduit arrangement,
**characterised in that** the device includes
first means (21, 23, 28) for determining the value of at least one primary parameter that includes the concentration of a substance, which is released from the control rod material during the operation of the nuclear plant, in said fluid, wherein said first means includes a measuring device (21, 23), which is arranged to measure the concentration of tritium in said fluid, and a measuring device (28), which is arranged to measure the concentration of helium in a gas flow discharged from said fluid,
second means (30, 33, 34, 36) for determining the value of at least one operational parameter related to said fluid,
third means (41 - 43) for standardising the value of said primary parameter with respect to the value of said operational parameter,
fourth means (41 - 43) for analysing the standardised value of said primary parameter, and
fifth means (41 - 43) for estimating the integrity of the control rod material on the basis of said analysis.

21. A device according to claim 20, wherein said second means includes a measuring device (30) which is arranged to measure said gas flow.

22. A method according to any one of claims 20 and 21, wherein said second means includes a measuring device (34), which is arranged toe measure an addition of said fluid to the circuit, and a measuring device (33), which is arranged to measure the concentration of tritium in said added fluid.

23. A device according to any one of claims 20 to 22, wherein said second means includes a measuring device (36), which is arranged to measure the effect generated by the plant.

24. A device according to any one of claims 20 to 23, which includes a processing unit (41 - 43) arranged to determine guide lines for the continuing operation of the plant with respect to said estimation.

25. A device according to claim 24, which includes a control unit (45) arranged to control the plant with respect to said guide lines.

26. A device according to any one of claims 20 to 25, which includes a memory unit (23) arranged to store historical data regarding said parameters.

## Patentansprüche

1. Verfahren zur Bewertung der Unversehrtheit von Kontrollstab-Material in einer Nuklearanlage, die umfasst:
einen Reaktorbehälter,
einen Reaktorkern, der in dem Reaktorbehälter eingeschlossen ist und aus einer Anzahl nuklearer Brennstoffelemente und aus einer Anzahl von Hüll-Elementen gebildet wird, in denen diese Kontrollsubstanz eingeschlossen ist und die in den Reaktorkern eingeführt und herausgezogen werden können, und
einen Kreislauf, der so angeordnet ist, dass er das Fließen einer Flüssigkeit durch den Reaktorkern und durch ein äußeres Leitungssystem ermöglicht,
**dadurch gekennzeichnet, dass** das Verfahren folgende Schritte umfasst:
Bestimmung des Wertes mindestens eines primären Parameters, der die Konzentration einer Substanz beinhaltet, die von dem Kontrollstab-Material während des Betriebs der Nuklearanlage in die Flüssigkeit abgegeben wird, wobei der primäre Parameter einen ersten primären Parameter umfasst, der die Konzentration von Tritium in der Flüssigkeit beinhaltet, sowie einen zweiten primären Parameter, der die Konzentration von Helium in einem aus dieser Flüssigkeit austretenden Gasstrom beinhaltet,
Bestimmung des Wertes mindestens eines Betriebsparameters bezüglich der Flüssigkeit,
Standardisierung des Wertes des primären Parameters im Hinblick auf den Wert des Betriebsparameters,
Analyse des standardisierten Wertes des primären Parameters und
Bewertung der Unversehrtheit des Kontrollstab-Materials auf der Basis dieser Analyse.

2. Verfahren nach Anspruch 1, bei dem die Flüssigkeit Speisewasser einschließt, das zum Reaktorbehälter geleitet wird und bei dem diese Bestimmung durch Messung im Speisewasser stattfindet.

3. Verfahren nach einem der Ansprüche 1 und 2, bei dem die Flüssigkeit Reaktorwasser einschließt, das in Reaktorbehälter vorhanden ist, und bei dem die genannte Bestimmung durch Messung im Reaktorwasser stattfindet.

4. Verfahren nach einem der Ansprüche 2 und 3, bei die Messung stattfindet, nachdem die Flüssigkeit durch einen Ionenaustauscher gelaufen ist.

5. Verfahren nach einem der Ansprüche 2 bis 4, bei dem die Messung stattfindet, nachdem die Flüssigkeit durch einen Partikelfilter gelaufen ist.

6. Verfahren nach einem der Ansprüche 2 bis 5, bei dem die Messung stattfindet, nachdem die Flüssigkeit durch einen Verzögerungskreislauf gelaufen ist.

7. Verfahren nach einem der vorhergehenden Ansprüche, das den Schritt einschließt, einen Referenzwert für den primären Parameter zu bestimmen.

8. Verfahren nach einem der vorhergehenden Ansprüche, das den nachfolgenden Schritt einschließt, Richtlinien für den fortlaufenden Betrieb der Anlage im Hinblick auf diese Bewertung festzulegen.

9. Verfahren nach einem der vorhergehenden Ansprüche, das den nachfolgenden Schritt einschließt, Richtlinien für die Inspektion und das Entfernen von defekten Kontrollstäben aus dem Reaktorkern während einer künftigen Stillegung der Anlage festzulegen.

10. Verfahren nach einem der Ansprüche 8 und 9, das den nachfolgenden Schritt einschließt, die Anlage im Hinblick auf diese Richtlinien zu steuern.

11. Verfahren nach einem der vorhergehenden Ansprüche, bei dem die Bestimmung des Wertes des primären Parameters im wesentlichen fortlaufend während des Betriebs der Anlage durchgeführt wird.

12. Verfahren nach einem der vorhergehenden Ansprüche, bei dem der Betriebsparameter einen ersten Betriebsparameter umfasst, der bezogen ist auf eine Zuführung der Flüssigkeit in den Kreislauf.

13. Verfahren nach Anspruch 12, bei dem die Anlage mit Verdünnungs-Speisewasser versorgt wird und bei dem das Verfahren den weiteren Schritt der Bestimmung der Zuführung von Tritium über das Verdünnungs-Speisewasser mittels Messung im Verdünnungs-Speisewasser umfasst.

14. Verfahren nach Anspruch 13, bei dem diese Bestimmung der Tritium-Zuleitung die Messung des Volumens und des Durchflusses des Verdünnungs-Speisewassers umfasst.

15. Verfahren nach einem der vorhergehenden Ansprüche, bei dem der Betriebsparameter einen zweiten Betriebsparameter umfasst, der auf die von der Anlage erzeugte Leistung bezogen ist.

16. Verfahren nach einem der vorhergehenden Ansprüche, bei dem der Betriebsparameter einen dritten Betriebsparameter umfasst, der auf den Gasstrom bezogen ist.

17. Verfahren nach einem der vorhergehenden Ansprüche, bei dem die Analyse im Hinblick auf Stammdaten, die diese Parameter betreffen, durchgeführt wird.

18. Verfahren nach Anspruch 17, bei dem, falls die Analyse einen defekten Kontrollstab anzeigt, die Ausdehnung des Defekts berechnet wird mittels eines Vergleichs des Leckens von Tritium und Helium aus dem defekten Kontrollstab mit dem Bestand an Tritium und Helium.

19. Verfahren nach einem der Ansprüche 17 und 18, bei dem diese Stammdaten aus einer Speichereinheit heruntergeladen werden, in der sie gespeichert sind.

20. Einrichtung zur Bewertung der Unversehrtheit von Kontrollstab-Material in einer Nuklearanlage, die umfasst:
einen Reaktorbehälter (1),
einen Reaktorkern (2), der im Reaktorbehälter eingeschlossen ist und gebildet ist aus einer Anzahl von nuklearen Brennstoffelementen (3) und einer Anzahl von Hüll-Elementen (4), in denen diese Kontrollsubstanz eingeschlossen ist, und die in den Reaktorkern (2) eingeführt und aus ihm herausgezogen werden können, und
einen Kreislauf (6), der so angeordnet ist, dass er das Fließen einer Flüssigkeit durch den Reaktorkern (2) und durch ein äußeres Leitungssystem erlaubt,
**dadurch gekennzeichnet, dass** die Einrichtung umfasst:
erste Mittel (21, 23, 28) zur Bestimmung des Wertes mindestens eines primären Parameters, der die Konzentration einer Substanz beinhaltet, die aus dem Kontrollstab-Material während des Betriebs der Nuklearanlage in die Flüssigkeit abgegeben wird, wobei die ersten Mittel eine Messeinrichtung (21, 23) umfassen, die dazu dient, die Konzentration von Tritium in der Flüssigkeit zu messen, sowie eine Messeinrichtung (28), die dazu dient, die Konzentration von Helium in einem Gasstrom zu messen, der aus der Flüssigkeit austritt,
zweite Mittel (30, 33, 34, 36) zur Bestimmung des Wertes mindestens eines Betriebsparameters bezüglich der Flüssigkeit,
dritte Mittel (41 - 43) zur Standardisierung des Wertes des primären Parameters im Hinblick auf den Wert des Betriebsparameters,
vierte Mittel (41-43) zur Analyse des standardisierten Wertes des primären Parameters, und
fünfte Mittel (41 - 43) zur Bewertung der Unversehrtheit des Kontrollstab-Materials auf der Basis dieser Analyse.

21. Einrichtung nach Anspruch 20, bei der die zweiten Mittel eine Messeinrichtung (30) umfassen, die dazu dient, den Gasstrom zu messen.

22. Verfahren nach einem der Ansprüche 20 und 21, bei dem die zweiten Mittel eine Messeinrichtung (34) umfassen, die dazu dient, eine Zuleitung der Flüssigkeit in den Kreislauf zu messen, sowie eine Messeinrichtung (33), die dazu dient, die Konzentration von Tritium in der zugeleiteten Flüssigkeit zu messen.

23. Einrichtung nach einem der Ansprüche 20 bis 22, bei der die zweiten Mittel eine Messeinrichtung (36) umfassen, die dazu dient, die von der Anlage erzeugte Leistung zu messen.

24. Einrichtung nach einem der Ansprüche 20 bis 23, die eine Prozessoreinheit (41 - 43) umfasst, die dazu dient, Richtlinien für den fortlaufenden Betrieb der Anlage im Hinblick auf die Bewertung festzulegen.

25. Einrichtung nach Anspruch 24, die eine Steuereinheit (45) umfasst, die dazu dient, die Anlage im Hinblick auf diese Richtlinien zu steuern.

26. Einrichtung nach einem der Ansprüche 20 bis 25, die eine Speichereinheit (23) umfasst, die dazu dient, Stammdaten bezüglich der Parameter zu speichern.

## Revendications

1. Procédé pour évaluer l'intégrité du matériau d'une barre de commande dans une centrale nucléaire qui comprend
- une cuve de réacteur,
- un coeur de réacteur qui se trouve dans la cuve de réacteur et est formé d'un certain nombre d'éléments de combustible nucléaire et d'un certain nombre d'éléments de gainage dans lesquels se trouve ledit matériau de commande et qui peuvent être introduits dans le coeur de réacteur et en être retirés et
- un circuit conçu pour permettre un écoulement d'un fluide à travers le coeur de réacteur et à travers un système de conduites extérieures,
**caractérisé en ce que** le procédé comprend les étapes suivantes :
- déterminer la valeur d'au moins un paramètre primaire qui comprend la concentration d'une substance libérée dans ledit fluide par le matériau de la barre de commande pendant que la centrale nucléaire fonctionne, ledit paramètre primaire comprenant un premier paramètre primaire qui comprend la concentration en tritium dans ledit fluide, un deuxième paramètre primaire qui comprend la concentration en hélium dans un écoulement de gaz dégagé par ledit fluide,
- déterminer la valeur d'au moins un paramètre fonctionnel relatif audit fluide,
- normaliser la valeur dudit paramètre primaire par rapport à la valeur dudit paramètre fonctionnel,
- analyser la valeur normalisée dudit paramètre primaire et
- estimer l'intégrité du matériau de la barre de commande à partir de ladite analyse.

2. Procédé selon la revendication 1, d'après lequel ledit fluide comprend de l'eau d'alimentation fournie à la cuve de réacteur et ladite détermination a lieu en réalisant une mesure sur l'eau d'alimentation.

3. Procédé selon l'une des revendications 1 et 2, d'après lequel ledit fluide comprend de l'eau de réacteur qui se trouve dans la cuve de réacteur et d'après lequel ladite détermination a lieu en réalisant une mesure sur l'eau de réacteur.

4. Procédé selon l'une des revendications 2 et 3, d'après lequel ladite mesure a lieu après que le fluide a traversé un échangeur d'ions.

5. Procédé selon l'une des revendications 2 à 4, d'après lequel ladite mesure a lieu après que le fluide a traversé un filtre à particules.

6. Procédé selon l'une des revendications 2 à 5, d'après lequel ladite mesure a lieu après que le fluide a traversé un circuit de retard.

7. Procédé selon l'une des revendications précédentes, comprenant l'étape de déterminer une valeur de référence pour ledit paramètre primaire.

8. Procédé selon l'une des revendications précédentes, comprenant l'étape suivante de déterminer des directives pour que la centrale fonctionne en continu en tenant compte de ladite estimation.

9. Procédé selon l'une des revendications précédentes, comprenant l'étape suivante de déterminer des directives pour inspecter et retirer du coeur de réacteur les barres de commande défectueuses pendant un arrêt ultérieur de la centrale.

10. Procédé selon l'une des revendications 8 ou 9, comprenant l'étape suivante de commander la centrale en tenant compte desdites directives.

11. Procédé selon l'une des revendications précédentes, d'après lequel déterminer la valeur dudit paramètre primaire a lieu pratiquement en continu pendant que la centrale fonctionne.

12. Procédé selon l'une des revendications précédentes, d'après lequel ledit paramètre fonctionnel comprend un premier paramètre fonctionnel relatif à un ajout dudit fluide au circuit.

13. Procédé selon la revendication 12, d'après lequel la centrale est alimentée en eau d'alimentation d'appoint et le procédé comprend en outre l'étape de
déterminer l'apport de tritium au moyen de l'eau d'alimentation d'appoint en mesurant l'eau d'alimentation d'appoint.

14. Procédé selon la revendication 13, d'après lequel ladite détermination de l'apport de tritium comprend l'opération de mesurer le volume et le débit de l'eau d'alimentation d'appoint.

15. Procédé selon l'une des revendications précédentes, d'après lequel ledit paramètre fonctionnel comprend un deuxième paramètre fonctionnel relatif à l'effet produit par la centrale.

16. Procédé selon l'une des revendications précédentes, d'après lequel ledit paramètre fonctionnel comprend un troisième paramètre fonctionnel relatif audit débit de gaz.

17. Procédé selon l'une des revendications précédentes, d'après lequel ladite analyse est réalisée en tenant compte de données historiques concernant lesdits paramètres.

18. Procédé selon la revendication 17, d'après lequel, si ladite analyse indique qu'une barre de commande est défectueuse, l'étendue du défaut est calculée en comparant la fuite de tritium et d'hélium sur la barre de commande défectueuse avec le stock de tritium et d'hélium.

19. Procédé selon l'une des revendications 17 et 18, d'après lequel lesdites données historiques sont chargées à partir d'une unité de mémoire dans laquelle elles sont enregistrées.

20. Dispositif pour évaluer l'intégrité du matériau d'une barre de commande dans une centrale nucléaire qui comprend
- une cuve de réacteur (1),
- un coeur de réacteur (2) qui se trouve dans la cuve de réacteur et est formé d'un certain nombre d'éléments de combustible nucléaire (3) et d'un certain nombre d'éléments de gaine (4) dans lesquels se trouve ledit matériau de commande et qui peuvent être introduits dans le coeur de réacteur (2) et en être retirés et
un circuit (6) conçu pour permettre un écoulement d'un fluide à travers le coeur de réacteur (2) et à travers un système de conduites extérieures,
**caractérisé en ce que** le dispositif comprend
- de premiers moyens (21, 23, 28) pour déterminer la valeur d'au moins un paramètre primaire qui comprend la concentration d'une substance libérée dans ledit fluide par le matériau de la barre de commande pendant que la centrale nucléaire fonctionne, lesdits premiers moyens comprenant un dispositif de mesure (21, 23) conçu pour mesurer la concentration en tritium dans ledit fluide et un dispositif de mesure (28) conçu pour mesurer la concentration en hélium dans un écoulement de gaz dégagé par ledit fluide,
- de deuxièmes moyens (30, 33, 34, 36) pour déterminer la valeur d'au moins un paramètre fonctionnel relatif audit fluide,
- de troisièmes moyens (41 à 43) pour normaliser la valeur dudit paramètre primaire en tenant compte de la valeur dudit paramètre fonctionnel,
- de quatrièmes moyens (41 à 43) pour analyser la valeur normalisée dudit paramètre primaire et
- de cinquièmes moyens (41 à 43) pour estimer l'intégrité du matériau de la barre de commande à partir de ladite analyse.

21. Dispositif selon la revendication 20, dans lequel lesdits deuxièmes moyens comprennent un dispositif de mesure (30) conçu pour mesurer ledit débit de gaz.

22. Procédé selon l'une des revendications 20 et 21, dans lequel lesdits deuxièmes moyens comprennent un dispositif de mesure (34) conçu pour mesurer un ajout dudit fluide dans le circuit et un dispositif de mesure (33) conçu pour mesurer la concentration en tritium dans ledit fluide ajouté.

23. Dispositif selon l'une des revendications 20 à 22, dans lequel lesdits deuxièmes moyens comprennent un dispositif de mesure (36) conçu pour mesurer l'effet produit par la centrale.

24. Dispositif selon l'une des revendications 20 à 23, équipé d'une unité de traitement (41 à 43) conçue pour déterminer des directives afin que la centrale fonctionne en continu en tenant compte de ladite estimation.

25. Dispositif selon la revendication 24, équipé d'une unité de commande (45) conçue pour commander la centrale en tenant compte desdites directives.

26. Dispositif selon l'une des revendications 20 à 25, équipé d'une unité de mémoire (23) conçue pour enregistrer des données historiques relatives auxdits paramètres.
